Europäisches Patentamt

European Patent Office

Office européen des brevets

(11) Veröffentlichungsnummer: **0 184 733**
**A2**

# (12) EUROPÄISCHE PATENTANMELDUNG

(21) Anmeldenummer: 85115165.4

(22) Anmeldetag: 29.11.85

(51) Int. Cl.⁴: **D 04 H 3/16**, D 01 D 5/08

(30) Priorität: 07.12.84 US 679429

(43) Veröffentlichungstag der Anmeldung: **18.06.86**
**Patentblatt 86/25**

(84) Benannte Vertragsstaaten: **AT BE CH DE FR GB IT LI LU NL SE**

(71) Anmelder: **Akzo GmbH,**
**Postfach 10 01 49 Kasinostrasse 19-23,**
**D-5600 Wuppertal-1 (DE)**

(72) Erfinder: **King, Charles L., Apt. 1911 750 N. Dearborn,**
**Chicago Illinois 60610 (US)**
Erfinder: **Mussro, Nicholas J., Jr., 96, Sandy Knoll Drive,**
**Doylestown Pennsylvania 18901 (US)**
Erfinder: **Roberts, Dennis Welmon, 559, Locust Grove**
**Road, Weaverville North Carolina 28787 (US)**

(54) **Verbesserte Faservliese, Verfahren zu ihrer Herstellung und ihre Verwendung.**

(57) Die Erfindung betrifft ein Faservlies aus einer Vielzahl von verwirbelten, willkürlich zueinander angeordneten synthetischen Fasern, die eine nichtgewebte Vliesstruktur bilden. Jede Faser enthält eine Vielzahl von im wesentlichen kugelförmigen Hohlräumen. Die Herstellung des Vlieses kann mit Hilfe eines Extrusions/Blasverfahrens erfolgen. Das Vlies ist für die Wärmeisolierung, die Trennung von Öl und Wasser sowie die gesteuerte Abgabe von Wirkstoffen besonders geeignet.

### Verbesserte Faservliese, Verfahren zu ihrer Herstellung und ihre Verwendung

Die vorliegende Erfindung betrifft verbesserte Faservliese aus einer Vielzahl von synthetischen, willkürlich zueinander angeordneten verwirbelten Fasern, die eine voluminöse nichtgewebte Vliesstruktur bilden. Sie betrifft ferner ein Verfahren zur Herstellung der Vliese sowie deren Verwendung, insbesondere zur Wärmeisolierung, zum Trennen von Öl und Wasser und zur gesteuerten Abgabe von Wirkstoffen.

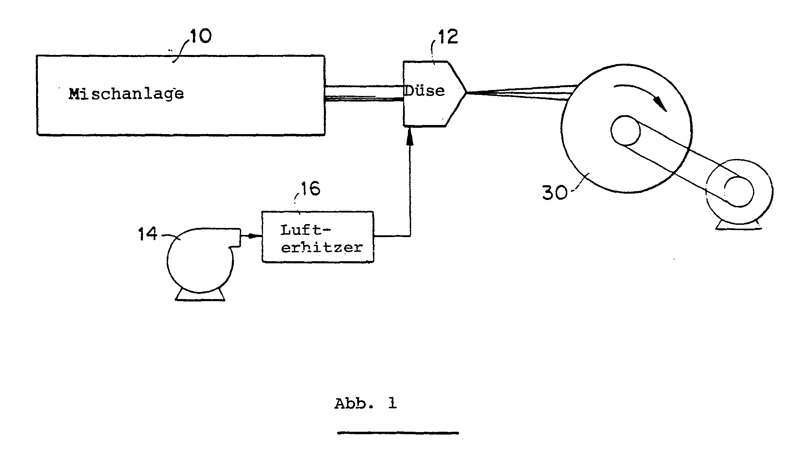

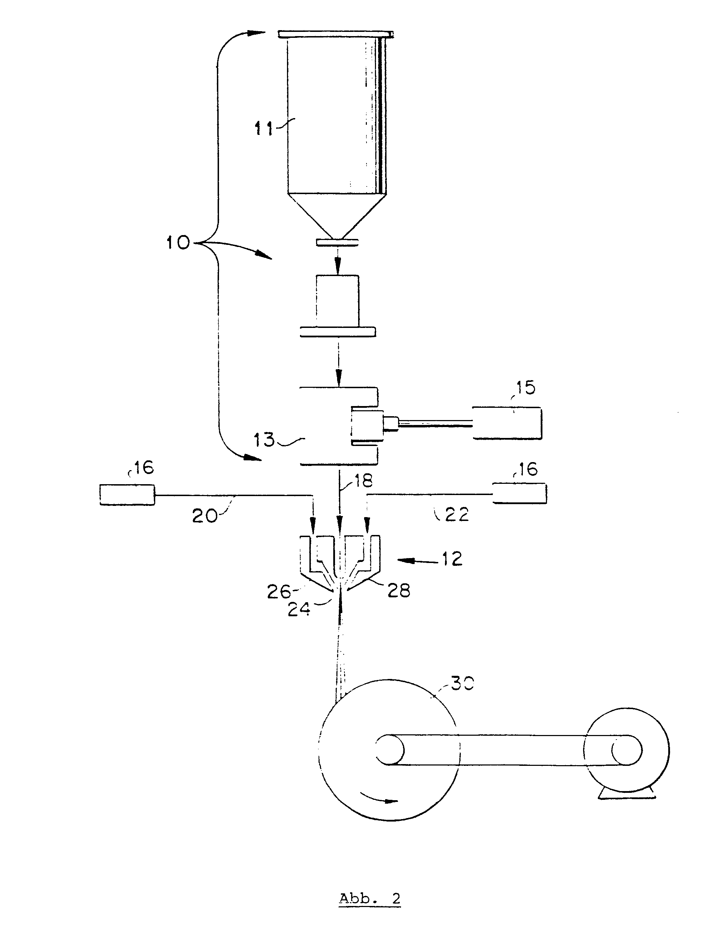

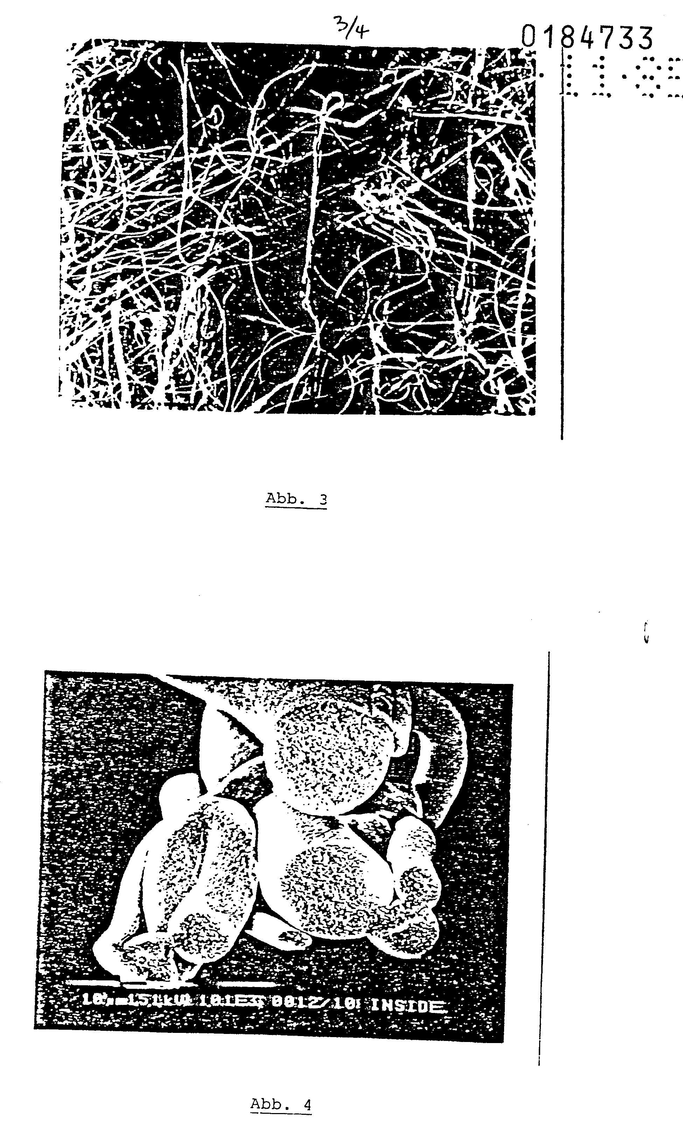

Ende der 60er Jahre hatte die Esso (jetzt Exxon) Research and Engineering Company ein Verfahren zur Herstellung von Faservliesen entwickelt, wobei eine Polymerschmelze durch eine speziell ausgebildete Düse gedrückt und die Fasern auf einem Substrat aufgenommen wurden. Ein Beispiel für das Exxon-Verfahren wird im U.S. Patent 3,684,415 beschrieben. Ein besseres Verständnis des Exxon-Schmelzspinnverfahrens ergibt sich aus Abb. 1, die in allgemeiner Form eine beim Exxon-Verfahren verwendete Apparatur darstellt, sowie aus Abb. 2, die u.a. einen geeigneten Spinnkopf zeigt. Gemäß Abb. 1 werden Polymerschnitzel, z.B. aus Polypropylen, in den Extruder 10 eingeführt, wo sie bis zur Verflüssigung des Polymers erhitzt werden. Die Extruderschnecke preßt das Polymer durch die Düse 12, die durch den Lufterhitzer 16 mit dem Gebläse 14 pneumatisch verbunden ist.

Wie aus Abb. 2 hervorgeht, fließt die Polymerschmelze durch die Bohrung 18 des Düsenkopfs. Der Düsenkopf ist mit einer Vielzahl von (auf der Abbildung nicht sichtbaren) Löchern zur Herstellung von Multifilamenten versehen.

Die erhitzte Luft von Gebläse 14 wird durch die Kammern 20
und 22 geführt, und die Heißluft und die Polymerschmelze
treffen an der Mündungsstelle 24 zusammen. An den Außenflächen
26 und 28 des Düsenkopfs strömt Kaltluft entlang, die direkt
hinter der Mündungsstelle 24 auf die gesponnenen Fasern trifft.
Durch den Heißluft- und den Kaltluftstrom werden die Filamente
verstreckt. Je nach Strömungsgeschwindigkeit der Luft können
die Filamente überdehnt werden und dabei reißen, wobei
Kurzfilamente entstehen.

Aus Abb. 1 geht ferner hervor, daß die Fasern auf die Siebtrommel 30 treffen, die eine Drehbewegung ausführen kann.
Dabei kommt es zu einer Ansammlung von aufeinander liegenden
Fasern, und beim Auftreffen der Fasern auf die Siebtrommel
befinden sich diese noch in einem teilweise geschmolzenen
Zustand und haften somit aneinander, wodurch ein Vlies entsteht. Dieses kann dann auf eine Aufwickelspule gewickelt
werden.
Als Einsatzmöglichkeiten für das Polypropylenvlies schlägt
Exxon u.a. vor: Filtrationsmedium, Absorbens, Zigarettenfilter,
etc.
Nach anderen Verfahren hergestellte Faservliese aus
synthetischem Polymermaterial haben verschiedene
Anwendungsbereiche gefunden, insbesondere für die
Wärmeisolierung in Bekleidung und Schlafsäcken. In letzter
Zeit sind sehr dünne Vliese entwickelt worden, die ein
gutes Isolationsvermögen besitzen und daher in der
Bekleidungsindustrie großen Anklang gefunden haben. Ein gutes
Beispiel für diese Art von dünnen Isoliervliesen ist ein
Produkt der Minnesota Mining & Manufacturing Company mit
der Bezeichnung Thinsulate. Das Material Thinsulate sowie
das Herstellungsverfahren werden im U.S.-Patent 4,118,531
beschrieben. Thinsulate ist eine Mischung aus Mikrofasern
und gekräuselten Bauschfasern, die ein voluminöses
elastisches Vlies mit einem hohen Wärmedurchgangswiderstand
pro Dickeeinheit sowie geringem Gewicht ergibt. Bei diesen Fasern handelt es sich um Standardpolymere in Stapelfaserform mit einem kompakten Kern. Das komplizierte Tangeln der
Mikrofasern und der größeren Bauschfasern führt zu Lufteinschschlüssen zwischen den Fasern, was gute Isoliereigenschaften
bewirkt.

Ein weiteres Beispiel eines neuen Isoliervlieses wird
im U.S.-Patent 4,304,817(E.I. Du Pont de Nemours & Company)
beschrieben. Das Patent von Du Pont betrifft eine zu einem
Vlies verarbeitete Füllfasermischung, bei der die Fasern
miteinander thermisch verbunden worden sind. Dabei werden
Feinfasern zusammen mit einer Bindefaser eingesetzt, so daß
sich ein angesichts seiner besonderen thermischen Eigenschaften relativ dünnes Vlies ergibt.

Ein weiteres neues Isolationsmaterial ist Eizac, das von
Teijin Ltd., Japan, entwickelt wurde. Bei Eizac handelt
es sich um einen nichtgewebten Vliesstoff, der nach dem
sogenannten Polyester-Berstfaser-Verfahren hergestellt wird.
Jede Faser enthält Lufteinschlüsse in Form von durch den
Faserkern verlaufenden länglichen Kanälen.
Viele der oben beschriebenen Vliese weisen beim Einsatz
als Wärmeisolierung jedoch einige Nachteile auf. Einige
der Fasern sind hydrophil, d.h. sie nehmen Feuchtigkeit auf,
was zu einer Erhöhung der Wärmeleitfähigkeit führt. Außerdem ist ein großer Teil dieser Vliese schwierig herzustellen.
Ferner kommt es bei einer Belastung der oben beschriebenen
Isoliervliese von 3 M und Du Pont, z.B. auf der Unterseite
eines Schlafsackes, zu einer starken Kompression des Vlieses,
verbunden mit einem Verlust der Vliesstruktur,und somit
zu einer wesentlichen Beeinträchtigung der Wärmeisolierung.

Aufgabe der vorliegenden Erfindung ist es, ein verbessertes
Faservlies sowie ein Verfahren zu seiner Herstellung zur
Verfügung zu stellen. Dabei sollte das verbesserte Faservlies ein verbessertes Isolationsmaterial darstellen,
dessen isolierende Wirkung auch im Fall eines dünnen Vlieses bei normaler Gewichtsbelastung nicht wesentlich beeinträchtigt wird. Daneben sollte sich das Faservlies für die
Trennung von Öl und Wasser sowie als Material zur gesteuerten Abgabe von Wirkstoffen eignen.

Die Aufgabe wurde gelöst durch ein Faservlies gemäß Oberbegriff von Anspruch 1, das dadurch gekennzeichnet ist, daß
die Fasern aus einer eine Vielzahl von im wesentlichen kugelförmigen Hohlräumen enthaltenden Polymerstruktur bestehen, sowie durch ein Verfahren zur Herstellung eines Vlieses mit
einer Vielzahl von im wesentlichen aus Endlosfilamenten
bestehenden Fasern, die ein Faservlies bilden, wobei
die Fasern jeweils eine Vielzahl von Poren aufweisen, das dadurch gekennzeichnet ist, daß man
eine Mischung aus einem Ausgangspolymer und einer
geeigneten Flüssigkeit bis zur Bildung einer homogenen
Lösung erhitzt, die Lösung durch eine schmale Düse
preßt, beim Austritt der Lösung aus der Düse ein Gas
auf die Lösung bläst, die Lösung abkühlt, so daß
eine Vielzahl von Fasern entsteht, die Fasern in
Form eines Vlieses auf ein Substrat ablegt und
einen wesentlichen Teil der geeigneten Flüssigkeit
aus dem Polymer entfernt, wodurch in den Fasern Poren
entstehen. Die Fasern bestehen aus einem Polymermaterial mit
einer Vielzahl von im wesentlichen kugelförmigen Hohlräumen.

Das Vlies kann dadurch hergestellt werden, daß man eine
Mischung aus einem Ausgangspolymer und einer geeigneten
Flüssigkeit so lange erhitzt, wie es zur Bildung einer
homogenen Lösung erforderlich ist. Die Lösung wird dann
durch eine schmale Düse, vorzugsweise mit einer Vielzahl
von Löchern, gepreßt, und beim Austritt der Lösung aus der Düse wird die Lösung mit einem Gas angeblasen, wodurch eine Vielzahl von Fasern entsteht, die anschließend abgekühlt werden. Die Fasern werden dann verwirbelt und in Vliesform auf ein Substrat aufgebracht. Danach wird die erwähnte geeignete Flüssigkeit aus dem Polymer entfernt, wobei im Polymer Poren zurückbleiben. Das Vlies eignet sich zur Wärmeisolierung, insbesondere bei Kleidung und Schlafsäcken. Bei Belastung des Vlieses kommt es zu keiner wesentlichen Veränderung der isolierenden Wirkung. Die Vliese können auch zur Trennung von Öl und Wasser sowie zur gesteuerten Abgabe von Wirkstoffen verwendet werden.

## Kurzbeschreibung der Zeichnungen

Abbildung 1 ist eine allgemeine schematische Darstellung einer vereinfachten Form einer zur Herstellung der erfindungsgemäßen Vliese geeigneten Vorrichtung.

Abbildung 2 ist eine detailliertere Darstellung der Vorrichtung von Abbildung 1; sie zeigt auch einen Querschnitt einer für das in Abbildung 1 dargestellte Verfahren geeigneten Düse.

Abbildung 3 ist eine Photographie eines Teils eines erfindungsgemäßen Faservlieses.

Abbildung 4 ist eine mikroskopische Aufnahme eines Querschnitts einer das Vlies von Abbildung 3 bildenden Gruppe von Fasern.

Abbildung 5 ist eine mikroskopische Aufnahme eines Querschnitts eines der im Rahmen der vorliegenden Erfindung verwendeten porösen Materialien.

Die Fasern bestehen vorzugsweise aus großen sowie sehr
kleinen Filamenten. Normalerweise liegt der Faserdurchmesser
zwischen 2 und 70 Mikron, wobei jedoch in einem Vlies auch
Kügelchen aus Nicht-Filament-Material mit einem Durchmesser
bis zu 9.375 Mikron beobachtet wurden. Vorzugsweise bestehen
alle Fasern aus endlosen Filamenten, so daß das Vlies eine
geschlossene Struktur aufweist, ohne daß es nötig ist,
daß die Fasern aneinander gebunden sind. Normalerweise
sind jedoch zahlreiche nebeneinanderliegende Fasern
aneinander schmelzgebunden.

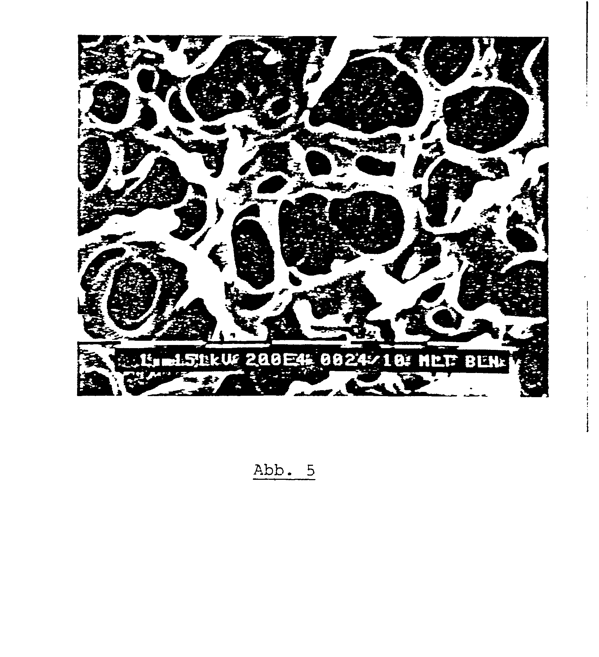

Wie aus Abbildung 4 hervorgeht, enthält jede Faser eine
Vielzahl von im wesentlichen kugelförmigen Poren bzw. Hohlräumen. Unter "im wesentlichen kugelförmigen Hohlräumen"
werden hierbei mehr oder weniger geschlossene Kammern mit
mehr oder weniger gerundeten Wänden verstanden. Dies wird
verdeutlicht durch Abbildung 5, die eine mikroskopische Aufnahme des Materials mit den aneinander angrenzenden kugelförmigen Poren darstellt. Die Poren bzw. Hohlräume können durch
schmale Kanäle miteinander verbunden sein, die jedoch oft
schwer zu beobachten sind. Innerhalb der Faser bilden die
Poren eine dreidimensionale Matrix. Es ist jedoch darauf
hinzuweisen, daß es sich bei der Hohlraum- bzw. Porenstruktur nicht um einen über die gesamte Faserlänge
verlaufenden Tunnel oder Spalt handelt, da die Faser in
diesem Fall bei Belastung zu leicht zusammengedrückt würde.
Es wird angenommen, daß die Poren bzw. Hohlräume in den einzelnen Fasern
zu einem wesentlichen Teil zum verbesserten Isolationsverhalten des Vlieses beitragen. Normalerweise wird das Vlies bei Einsatz als Isolationsmaterial als Einlage
zwischen zwei Lagen textilen Materials verwendet.
Die Hohlräume bzw. Poren können innerhalb derselben Faser,
von Faser zu Faser im selben Vlies und von Faser zu Faser
in verschiedenen Vliesen, insbesondere bei Verwendung
von unterschiedlichen Ausgangspolymeren und vor allem
bei Verwendung von unterschiedlichen geeigneten Flüssigkeiten, unterschiedlich beschaffen sein. In dem unten
erwähnten U.S.-Patent 4,247,498, in dem ähnliche Stoffe
- jedoch nicht in Faserform - beschrieben werden, sind
Porendurchmesser von ca. 1/2 Mikron bis ca. 100 Mikron,
vorzugsweise jedoch höchstens 50 Mikron und idealerweise
ca. 4 Mikron, angegeben. Bei einigen Fasern der vorliegenden
Erfindung wurden im selben Vlies Unterschiede in der Porengröße zwischen den einzelnen Fasern festgestellt, deren
Porendurchmesser zwischen 0,05 Mikron und 1,1 Mikron lag.
Der durchschnittliche Porendurchmesser betrug ca. 0,4 Mikron.
Als Ausgangsmaterial wurde in diesem Fall Polypropylen (30 Gew.-%)
verwendet und die geeignete Flüssigkeit bestand vor der
Extraktion der Öle aus einer Mischung aus Sojabohnenöl
(52 Gew.-%) und Rizinusöl (18 Gew.-%).
Die Tatsache, daß die erfindungsgemäßen Fasern mit einer
porösen Matrix gebildet werden, ist insofern von Bedeutung,
als dadurch die wärmeisolierende Wirkung beim Zusammendrücken des Vlieses bei Belastung erhalten bleibt.
Da das Vlies normalerweise aus sehr kleinen und einigen
größeren Fasern besteht, ist die isolierende Wirkung des Vlieses wesentlich besser als bei einem Vlies, das nur aus
Filamenten einer Größe besteht, wobei gleichzeitig die
Aufrechterhaltung der Vliesstruktur gewährleistet ist.
Die größeren Fasern verleihen dem Vlies seine Bauschigkeit,
während die kleineren Fasern miteinander und mit den
großen Bauschfasern verwirbelt sind. Die Bauschfasern
üben innerhalb des Vlieses eine Trennwirkung aus, so daß
ein flauschiges, elastisches Vlies entsteht. Somit sind
die feinen Fasern von Luft umgeben, und auch innerhalb
der kugelförmigen Poren in den einzelnen Fasern befindet
sich Luft, wodurch auch ein sehr dünnes Vlies eine sehr
gute wärmeisolierende Wirkung aufweist.
Außerdem nimmt das Vlies bei Verwendung eines hydrophoben
Polymers, z.B. Polypropylen, als Fasermaterial, kein Wasser
auf, wodurch die isolierende Wirkung des Vlieses in
feuchter Umgebung weiter erhöht wird.

Ferner kann das erfindungsgemäße Vlies zur Trennung von
Öl und Wasser benutzt werden. Wenn es sich bei dem zur
Faserherstellung verwendeten Polymer um ein hydrophobes
Material handelt, nimmt das Vlies das Öl auf, während
bei Einsatz von hydrophilen Fasern das Wasser aufgenommen
wird.

Da die einzelnen Fasern eine Vielzahl von miteinander
verbundenen Hohlräumen besitzen, einschließlich Hohlräumen,
die an der Faseroberfläche liegen, d.h. keine Haut aufweisen, eignet sich das Vlies auch gut zur gesteuerten
Abgabe von Wirkstoffen. Es wurde zum Beispiel gefunden,
daß man das oben beschriebene Vlies zur Herstellung von
rauchfreien Zigaretten verwenden kann, wobei das Vlies mit Nikotin in flüssiger Form imprägniert und in der
Zigarette anstelle von Tabak eingesetzt wird, wobei das
Nikotin durch die Poren allmählich freigesetzt und vom
Benutzer eingesaugt wird, ohne daß hierfür ein Anzünden
der Zigarette erforderlich ist.
Als Ausgangspolymere zur Herstellung der Fasern eignen
sich zum Beispiel Polypropylen, Polyäthylen, Polyamide und
Polymethylacrylat.   Die Poren in den Fasern können nach dem
im U.S.-Patent 4,247,498 beschriebenen Verfahren
erzeugt werden. Auf die Offenbarung des
U.S.-Patents 4,247, 498 wird in der vorliegenden Erfindung
Bezug genommen. Zur Herstellung der erfindungsgemäßen
Vliese werden ein Ausgangspolymer und eine geeignete
Flüssigkeit verwendet. Schnitzel aus dem Ausgangspolymer
werden in der geeigneten Flüssigkeit bei erhöhter Temperatur
gelöst und dann der in Abbildung 1 gezeigten Mischvorrichtung 10 zugeführt. Als Mischvorrichtung eignet sich
z.B. ein Extruder oder eine Zahnradpumpe. Als Ausgangspolymer sollte man ein synthetisches thermplastisches Polymer,
z.B. ein olefinisches Kondensations- oder Oxydationspolymer
verwenden. Als geeignete Flüssigkeit, die schließlich die
Bildung der Hohlräume im Polymer bewirkt, kommt eine der
zahlreichen mit dem Ausgangspolymer verträglichen Flüssigkeiten, daß heißt, eine Flüssigkeit, die das Polymer
chemisch nicht verändert und es bei erhöhter Temperatur
löst, in Frage. Eine der vorzugsweise für ein Ausgangspolymer aus Polypropylen verwendeten geeigneten Flüssigkeiten ist N,N-bis-(2-Hydroxyäthyl) -Talgamin. Andere
bevorzugte geeignete Flüssigkeiten sind Flüssigkeitsmischungen, z.B. aus Sojabohnenöl und Rizinusöl. Als
Ausgangspolymer eignen sich u.a. die folgenden Arten:

Von den nicht-acrylischen Polyolefinen eignen sich z.B.
Polyäthylen niedriger Dichte, Polyäthylen hoher Dichte,
Polypropylen, Polystyrol, Polyvinylchlorid,
Styrol-Butadien-Copolymere, Poly(4-Methyl-Penten-1),
Polybutylen, Polyvinylidenchlorid, Polyvinyl-Butyral,
chloriertes Polyäthylen, Äthylen-Vinylacetat-Copolymere,
Polyvinylacetat und Polyvinylalkohol.

Geeignete acrylische Polyolefine sind u.a. Polymethylmethacrylat, Polymethylacrylat, Acrylnitril-Butadien-Styrol-
Terpolymere, Styrol-Acrylnitril-Copolymer, Äthylen-Acrylsäure-Copolymere und Äthylen-Acrylsäuremetallsalz-Copolymere.

Ein repräsentatives Beispiel eines geeigneten Oxydationspolymers ist Polyphenylenoxyd. Geeignete Kondensationspolymere sind u.a. Polyäthylenterephthalat, Polybutylenterephthalat, Polyamide, z.B. Nylon 6, Nylon 11, Nylon 13
und Nylon 66, Polycarbonate und Polysulfon.

Für die Herstellung von mikroporösen Polymeren aus Polypropylen eignen sich folgende Flüssigkeiten: Alkohole,
z.B. 2-Benzylamino-1-Propanol und 3-Phenyl-1-Propanol,
Aldehyde, z.B. Salicylaldehyd; Amide, z.B. N,N-Diäthyl-
m-Toluamid; Amine, z.B. N-Hexyl-Diäthanolamin, N-Behenyl-
Diäthanolamin, N-Cocos-Diäthanolamin, Benzylamin, N,N-bis-
(ß-Hydroxyäthyl)-Cyclohexylamin, N,N-bis-(ß-Hydroxyäthyl)-
Talgamin, Diphenylamin und 1,12-Diaminododecan; Ester,
z.B. Methylbenzoat, Benzylbenzoat, Phenylsalicylat,
Methylsalicylat und Dibutylphthalat; Äther, z.B.
Diphenyläther, 4-Bromdiphenyläther und Dibenzyläther.
Ferner eignen sich Halogenkohlenstoffe, z.B. 1,1,2,2-
Tetrabromäthan, und Kohlenwasserstoffe, z.B. trans-Stilben

- 11 -

und andere. Alkyl/Arylphosphite sowie Ketone, z.B. Methylnonyl-Keton sind ebenfalls geeignet.

Bei der Herstellung von mikroporösen Polymeren aus Polyäthylen hoher Dichte haben sich gesättigte aliphatische
Säuren, z.B. Decansäure, primäre gesättigte Alkohole,
z.B. Decylalkohol und 1-Dodecanol, sekundäre Alkohole,
z.B. 2-Undecanol und 6-Undecanol, äthoxylierte Amine,
z.B. N-Lauryldiäthanolamin, aromatische Amine, z.B.
N-N-Diäthylanilin, Diester, z.B. Dibutylsebacat und
Dihexylsebacat und Äther, z.B. Diphenyläther und Benzyläther, als geeignet erwiesen. Weitere geeignete Flüssigkeiten sind Halogenverbindungen, z.B. Octabromdiphenyl,
Hexabrombenzol und Hexabromcyclodecan, Kohlenwasserstoffe,
z.B. 1-Hexadecan, Diphenylmethan und Naphthalin, aromatische Verbindungen, z.B. Acetophenon,  und andere
organische Verbindungen, z.B. Alkyl/Aryl-Phosphite und
Chinolin und Ketone, z.B. Methylnonylketon.

Zur Herstellung von mikroporösen Polymeren aus Polyäthylen
niedriger Dichte haben sich folgende Flüssigkeiten als
geeignet erwiesen: gesättigte aliphatische Säuren, z.B.
Hexansäure, Caprylsäure, Decansäure, Undecansäure,
Laurinsäure, Myristinsäure, Palmitinsäure und Stearinsäure,
ungesättigte aliphatische Säuren, z.B. Ölsäure und
Erucasäure, aromatische Säuren, z.B. Benzosäure, Phenylstearinsäure, Polystearinsäure und Xylylbehensäure und
andere Säuren, z.B. verzweigte  Carbonsäuren mit einer
durchschnittlichen Kettenlänge von 6, 9 und 11 Kohlenstoffatomen, Tallölsäuren und Rosinsäure (Mischung aus Säuren
der allgemeinen Formel $C_{19}H_{29}$ COOH mit Pimarinsäure und
Abietinsäure als Hauptbestandteilen) primäre gesättigte
Alkohole, z.B. 1-Octanol, Nonylalkohol, Decylalkohol,
1-Decanol. 1-Dodecanol, Tridecylalkohol, Cetylalkohol und 1-Heptadecanol, primäre ungesättigte Alkohole, z.B.
Undecylenylalkohol und Oleylalkohol, sekundäre Alkohole,
z.B. 2-Octanol, 2-Undecanol, Dinonylcarbinol und Diundecylcarbinol, und aromatische Alkohole, z.B. 1-Phenyläthanol,
1-Phenyl-1-Pentanol, Nonylphenol, Phenylstearylalkohol
und 1-Napththol. Weitere geeignete hydroxylhaltige Verbindungen sind Oleylalkohol-Polyoxyäthylenäther und
Polypropylenglykol mit einem Zahlenmittel des Molekulargewichtes von ca. 400. Weitere geeignete Flüssigkeiten
sind cyclische Alkohole, z.B. 4-t-Butyl-Cyclohexanol
und Methanol, Aldehyde, z.B. Salicylaldehyd, primäre
Amine, z.B. Octylamin, Tetradecylamin und Hexadecylamin,
sekundäre Amine, z.B. bis-(1-Äthyl-3-Methylpentyl)amin
und äthoxylierte Amine, z.B. N-Lauryldiäthanolamin,
N-Talgdiäthanolamin, N-Stearyldiäthanolamin und N-
Cocosdiäthanolamin.

Weitere geeignete Flüssigkeiten sind aromatische Amine,
z.B. N-sec-Butyl-anilin, Dodecylamin, N,N-Dimethylanilin,
N,N-Diäthylanilin, p-Toluidin, N-Äthyl-o-Toluidin,
Diphenylamin und Aminodiphenylmethan, Diamine, z.B.
N-Erucyl-1,3-Propandiamin und 1,8-Diamino-p-Menthan,
weitere Amine, z.B. verzweigte Tetramine und Cyclodecylamin,
Amide, z.B. Cocosamid, hydriertes Talgamid, Octadecylamid,
Erucasäureamid, N,N-Diäthyl-toluamid und N-Trimethylpropan-stearamid, gesättigte aliphatische Ester, z.B.
Methylcaprylat. Äthyllaurat, Isopropylmyristat, Äthylpalmitat, Isopropylpalmitat, Methylstearat, Isobutylstearat
und Tridecylstearat, ungesättigte Ester, z.B. Stearylacrylat,
Butylundecylenat und Butyloleat, Alkoxy-Ester, z.B.

- 13 -

Butoxyäthylstearat und Butoxyäthyloleat, aromatische Ester, z.B. Vinylphenylstearat, Isobutylphenylstearat, Tridecylphenylstearat, Methylbenzoat, Äthylbenzoat, Butylbenzoat, Benzylbenzoat, Phenyllaurat, Phenylsalicylat, Methylsalicylat und Benzylacetat, und Diester, z.B. Dimethylphenylendistearat, Diäthylphthalat, Dibutylphthalat, Di-isooctylphthalat, Dicapryladipat, Dibutylsebacat, Dihexylsebacat, Di-isooctylsebacat, Dicaprylsebacat und Dioctylmaleat. Zu den weiteren geeigneten Flüssigkeiten gehören Polyäthylenglykoläther, z.B. Polyäthylenglykol (mit einem Zahlenmittel des Molekulargewichtes von ca. 400) Diphenylstearat, Polyhydroxylester, z.B. Rizinusöl (Triglycerid), Glycerinmonostearat, Glycerinmonooleat, Glykoldistearat, Glycerindioleat und Trimethylolpropan-Monophenylstearat, Äther, z.B. Diphenyläther und Benzyläther, Halogenverbindungen, z.B. Hexachlorcyclopentadien, Octabrombiphenyl, Decabromdiphenyloxyd und 4-Bromdiphenyläther, Kohlenwasserstoffe, z.B. 1-Nonen, 2-Nonen, 2-Undecen, 2-Heptadecen, 2-Nonadecen, 3-Eicosen, 9-Nonadecen, Diphenylmethan, Triphenylmethan und trans-Stilben, aliphatische Ketone, z.B. 2-Heptanon, Methylnonylketon, 6-Undecanon, Methylundecylketon, 6-Tridecanon, 8-Pentadecanon, 11-Pentadecanon, 2-Heptadecanon, 8-Heptadecanon, Methyl-heptadecylketon, Dinonylketon und Distearylketon, aro-matische Ketone, z.B. Acetophenon und Benzophenon, und andere Ketone, z.B. Xanthon. Weitere geeignete Flüssigkeiten sind Phosphorverbindungen, z.B. Trixylenylphosphat, Polysiloxane, Muget hyacinth (An Merigenaebler, Inc.), Terpineol Prime No. 1 (Givaudan-Delawanna, Inc.), Bath Oil Fragrance #5864 K (International Flavor & Fragrance, Inc.), Phosclere P315C (Organophosphit), Phosclere P576 (Organophosphit), styrolisiertes Nonylphenol, Chinolin und Chinazolidin.

- 14 -

Zur Herstellung von mikroporösen Polymerprodukten aus
Polystyrol eignen sich als Flüssigkeiten tris-halogeniertes
Propylphosphat, Aryl-Alkylphosphite, 1,1,2,2-Tetrabromäthan,
Tribromneopentylalkohol, 40% Voranol C.P. 3000·Polyol
und 60% Tribromneopentylalkohol, Tris-ß-chloräthylphosphat,
Tris(1,3-Dichlorisopropyl)Phosphat, Tri(dichlorpropyl)
phosphat, Dichlorbenzol und 1-Dodecanol.

Zur Herstellung von mikroporösen Polymeren aus Polyvinylchlorid geeignete Flüssigkeiten sind aromatische Alkohole,
z.B. Methoxybenzylalkohol, 2-Benzylamino-1-Propanol und
andere hydroxylhaltige Flüssigkeiten, z.B. 1,3-Dichlor-
2-Propanol. Weitere geeignete Flüssigkeiten sind halogenierte
Verbindungen, z.B. Firemaster T33P (Tetrabromphthalsäurediester) und aromatische Kohlenwasserstoffe, z.B. trans-
Stilben.

Ferner wurden mikroporöse Produkte aus anderen Polymeren
und Copolymeren sowie Mischungen hergestellt. So eignen
sich zur Herstellung von mikroporösen Produkten aus Styrol-
Butadien-Copolymeren Flüssigkeiten wie Decylalkohol,
N-Talg-Diäthanolamin, N-Cocosdiäthanolamin und Diphenylamin. Zur Herstellung von mikroporösen Polymeren aus
Äthylen-Acrylsäure-Copolymersalzen geeignete Flüssigkeiten
sind N-Talg-Diäthanolamin, N-Cocos-diäthanolamin,
Dibutylphthalat und Diphenyläther. Mikroporöse Polymerprodukte aus hochschlagzähem Polystyrol lassen sich herstellen, indem man als Flüssigkeiten Hexabrombiphenyl
oder Alkyl/Aryl-Phosphite verwendet. Aus "Noryl", einer
Mischung aus Polyphenylenoxyd und Polystyrol (General
Electric Company), lassen sich mikroporöse Polymere unter
Verwendung von N-Cocos-diäthanolamin, N-Talg-Diäthanolamin,

- 15 -

Diphenylamin, Dibutylphthalat oder Hexabromphenol herstellen.
Mikroporöse Polymere aus Mischungen von Polyäthylen geringer
Dichte und chloriertem Polyäthylen kann man unter Verwendung
von 1-Diäthanolamin herstellen. Bei Verwendung von 1-Dodecanol
als Flüssigkeit lassen sich mikroporöse Polymerprodukte aus
folgenden Mischungen herstellen: Polypropylen/chloriertes
Polyäthylen, Polyäthylen hoher Dichte/Polyvinylchlorid und
Polyäthylen hoher Dichte/Acrylnitrilbutadienstyrol (ABS)-
Terpolymere. Zur Herstellung von mikroporösen Produkten
aus Polymethylmethacrylat haben sich 1-4-Butandiol und
Laurinsäure als geeignet erwiesen. Mikroporöses Polyamid
11 läßt sich unter Verwendung von Äthylencarbonat, 1,2-
Propylencarbonat oder Tetramethylensulfon herstellen.
Menthol läßt sich zur Herstellung von mikroporösen Produkten
aus Polycarbonat verwenden.

Zur Porenbildung im Ausgangspolymer können auch zwei oder
mehr Flüssigkeiten gleichzeitig verwendet werden.
Ein Beispiel für dieses Verfahren wird in der am 15. Februar
1982 eingereichten bundesdeutschen Patentanmeldung P 32 o5 289
beschrieben.

Ein Verfahren zur Herstellung der neuartigen Vliese unter
Verwendung der oben beschriebenen Ausgangspolymere und
geeigneten Flüssigkeiten wird nachfolgend beschrieben.
Wie in Abbildung 1 dargestellt, werden die Flüssigkeit
und die Polymerverbindung bis zur Bildung einer homogenen
Lösung in der Mischvorrichtung 10 geschmolzen und gemischt.
Die Mischvorrichtung kann aus einem Extruder oder einer
Kombination aus einem Spinngefäß 11 und einer Zahnradpumpe 13
bestehen, wie in Abbildung 2 dargestellt. Die Zahnradpumpe

- 16 -

wird durch den Pumpenantrieb 15 betätigt. Von der Mischanlage aus gelangt die homogene Lösung in die Schmelzblasdüse 12. Wie in Abbildung 2 dargestellt, fließt die
Lösung beim Passieren der Leitung 18 durch eine Vielzahl
von Löchern, verläßt dann die Düse und kommt an der Mündungsstelle 24 mit primären, mit hoher Geschwindigkeit die
Kanäle 20 und 22 passierenden, Luftströmungen von hoher
Temperatur in Berührung. Diese Primärluft wird an beiden
Seiten der Lösung zugeführt. Die Luft wird von der Heizvorrichtung 16 erhitzt. Die Temperatur der Luftströme
liegt normalerweise zwischen 150°C und 220°C, je nach Art
des eingesetzten Polymers. Beim Verlassen der Düse wird
die homogene geschmolzene Lösung von der Primärluft verstreckt. Danach kommt die Lösung mit einer großen Menge
an Kaltluft - hier als Sekundärluft bezeichnet - die sich
entlang den Flächen 26 und 28 der Düse bewegen kann, in
Berührung, wodurch sich die Lösung zu Fasern verfestigt,
die dann abgekühlt werden. Die Kühlluft kann unter gewissen
Umständen, z.B. bei kleinen Anlagen, aus kühler Umgebungsluft bestehen. Bei größeren Anlagen wird sie jedoch
normalerweise auf mechanischem Wege erzeugt, um einen
Temperaturausgleich im Blasbereich zu gewährleisten. Die
Verstreckung und Abkühlung der Fasern erfolgt normalerweise in einer Entfernung von ca. 15 bis 20 cm von der
Düsenplatte. An dieser Stelle erreichen die Fasern
normalerweise ihren Enddurchmesser und erstarren, und in
einem Abstand von einigen Zentimetern von der Düsenvorderseite sind sie völlig abgekühlt. Somit erfolgt die Faserbildung bei sehr hoher Geschwindigkeit. Es ist jedoch
zu beachten, daß sich der Streck- und Kühlabstand in erster
Linie nach der Art des verwendeten Polymers richtet.

- 17 -

Bei Verwendung einer Polymerschmelze ohne die geeignete
Flüssigkeit war festzustellen, daß die erstarrten aus
der Düse hervortretenden Fasern ständig brachen, wodurch
Fasern mit einer Länge von einigen Zentimetern bis zu ca.
30 cm entstanden. Bei Verwendung einer homogenen Lösung
(Polymer/Flüssigkeits-Mischung) in der Mischanlage hat
sich jedoch gezeigt, daß jede Faser als Endlosfilament
gebildet wird, das normalerweise während der Herstellung
des neuartigen Vlieses nicht reißt. Es wird angenommen,
daß dies auf die sehr niedrige Viskosität von ca. 20 - 200 Pa·s
der erfindungsgemäß verwendeten homogenen Lösung zurückzuführen ist. Beim Extrudieren einer homogenen Lösung unter
Verwendung von Polypropylen als Ausgangspolymer besteht
die homogene Lösung normalerweise zu ca. 10 - 50% aus
Polypropylen, während der Rest auf die geeignete Flüssigkeit
entfällt, was die niedrige Viskosität bewirkt.

Somit ist man, will man ein zusammenhängendes Vlies erhalten, nicht auf eine Schmelzverfestigung der Fasern im
Vlies angewiesen, da die Filamente in endloser Form vorliegen. Diese Endlosfilamente bieten u.a. den großen Vorteil,
daß sich das Vlies leicht aufrollen läßt. Das Verhältnis
zwischen der Menge des Ausgangspolymers und der geeigneten
Flüssigkeit beeinflußt sowohl die Porengröße als auch
die Gesamtfestigkeit der Faser. Die eingesetzte Flüssigkeitsmenge sollte also so gewählt werden, daß die entstehende mikroporöse Struktur bei der Handhabung eine
ausreichende Mindestfestigkeit aufweist, um dadurch ein
Zusammenfallen der mikroporösen bzw. Zellstruktur zu
verhindern.

Auch sollte die eingesetzte Polymermenge nicht so groß sein, daß es zu einem Verschluß der Zellen oder anderer mikroporöser Bereiche kommt mit der Folge, daß keine Luft in die Zellen eindringen kann. Ein geeignetes Material läßt sich zum Beispiel herstellen unter Verwendung von Polyäthylen hoher Dichte als Ausgangspolymer und N,N-bis-(2-Hydroxyäthyl)-Talgamin als geeignete Flüssigkeit, wobei die geeignete Flüssigkeit in einer Menge von ca. 30 - ca. 90 Gew.-%, bezogen auf das Ausgangspolymer, zum Einsatz gelangt.

Bei Verwendung von Polypropylen als Ausgangspolymer zusammen mit der im vorausgehenden Absatz genannten geeigneten Flüssigkeit kann die geeignete Flüssigkeit in einer Menge von bis zu ca. 10 - 90%, vorzugsweise jedoch höchstens 85%, eingesetzt werden. Zur Herstellung von Endlosfilamenten sollte bei einer Mischung aus Polypropylen als Ausgangspolymer und N,N-bis-(2-Hydroxyäthyl)-Talgamin als geeignete Flüssigkeit die Menge des eingesetzten Polypropylens jedoch vorzugsweise im Bereich zwischen etwa 10 und 50% liegen.

In dem in Abbildung 1 dargestellten Bereich zwischen der Düse 12 und der Siebtrommel 30 erfolgt eine gewisse Verwirbelung der Fasern. Normalerweise beträgt der Abstand zwischen der Düse und der Siebtrommel ca. 17 - 25 cm. Die Fasern werden auf der perforierten Abzugswalze 30 als kontinuierliches Vlies mit einer guten Geschlossenheit abgelegt. Die Verwirbelung der Fasern und die Oberflächenanziehung der kleinen Fasern führen zu einer Eigenverfestigung, die im Ablagebereich erfolgt; bei Verwendung von Endlosfilamenten ist für die Vliesbildung jedoch keine Eigenverfestigung erforderlich.

- 19 -

Wie aus Abbildung 3 hervorgeht, sind die Fasern sehr willkürlich angeordnet. Für die nachfolgende Handhabung und Aufwicklung auf die Siebtrommel 30 weist das Vlies eine sehr
gute Festigkeit auf. Wegen der hohen Geschwindigkeit, mit
der die Luftzufuhr bei der Faserbildung erfolgt, werden
die Fasereigenschaften von der Geschwindigkeit der Anlage
nicht beeinflußt. Somit weisen mit geringer Produktionsgeschwindigkeit hergestellte Vliese mit sehr hohem Grundgewicht ähnliche Fasereigenschaften auf wie mit hoher
Produktionsgeschwindigkeit hergestellte Vliese mit geringem
Grundgewicht. Die oben beschriebenen Vliese lassen sich
auch mit Mehrfachdüsen herstellen, bei denen die Vliesbildung
auf einer Förderband-Vorrichtung erfolgt.

Das auf die Aufwickeleinheit 32 aufgewickelte Vliesmaterial enthält nun eine Vielzahl von Fasern, die aus
einem Ausgangspolymer gebildet sind und die mit einer,
in kugelförmigen miteinander verbundenen Kammern
befindlichen, geeigneten Flüssigkeit imprägniert
sind.
Die nächste Verfahrensstufe besteht aus der Extraktion
der geeigneten Flüssigkeit aus dem Ausgangspolymer,
wodurch in den Fasern leere, Luft enthaltende Hohlräume
entstehen. Die Extraktion der Flüssigkeit kann gemäß
U.S.-Patent 4,247,498 erfolgen, normalerweise unter Verwendung
eines Alkohols. Dabei läßt man das Vlies durch einen
Standardextraktor mit einer Alkoholatomosphäre laufen.
Ein Beispiel eines geeigneten Alkohols ist Isopropylalkohol.
Nach der Extraktion der geeigneten Flüssigkeit enthalten

- 20 -

die im Vlies befindlichen Fasern räumlich miteinander verbundene kugelförmige Mikroporen, wie in Abbildung 5 dargestellt. Nach der Extraktion weisen die nach dem obigen Verfahren hergestellten Vliese normalerweise eine Porosität von 75 bis 85% auf, die sich nach dem Verhältnis Polymer/geeignete Flüssigkeit richtet, d.h. daß man bei Verwendung von 15% Ausgangspolymer und 85% der geeigneten Flüssigkeit normalerweise eine Porosität von 85% erhält.

Um festzustellen, ob man nach dem Verfahren zur Herstellung von porösen Polymeren gemäß der Lehre von U.S.-Patent 4,247,498 poröse Fasern nach dem oben beschriebenen Schmelzblasverfahren herstellen kann, wurden die folgenden in Beispiel 1 bis 4 beschriebenen Versuche durchgeführt:

Beispiel 1

1.050 g von Exxon bezogenes Polypropylen wurde mit 1890 ml Sojabohnenöl und 630 ml Rizinusöl versetzt, wobei die Öle die geeignete Flüssigkeit darstellten. Das Gewichtsverhältnis betrug 28,4% Polypropylen, 53,7% Sojabohnenöl und 17,9% Rizinusöl. Die genannten Stoffe wurden in die in Abbildung 1 dargestellte Mischanlage gegeben und auf 200°C erhitzt, wobei die Düsenkopftemperatur 200°C betrug. Die durch die Kanäle 20 und 22 strömende Heißluft hatte eine Temperatur von 155°C und die Strömungsgeschwindigkeit betrug 5 scfm (standard cubic feet per minute - ein Maß für den Fluß an   Luft unter adiabatischen Standard-Bedingungen, nämlich bei 20°C und 1 bar Druck). Die Entfernung zwischen der Spinndüse und der Aufwickelvorrichtung lag zwischen 45 und 60 cm. Als Extraktionsmedium wurde Isopropylalkohol verwendet. Es wurden Versuche durchgeführt, um festzustellen, ob der Polypropylenanteil während der Laufzeit der gleiche bleibt wie in der ursprünglich hergestellten Polypropylen/

- 21 -

Sojabohnen-öl/Rizinusöl-Lösung. Die erste Probe wurde nach
einer Laufzeit von sechs Minuten extrahiert. Vor der
Extraktion wog die Probe 2,874 g und nach der Extraktion
0,8821 g, was einem Polypropylenanteil von 30,7% entspricht.

Beispiel 2
Es wurde das gleiche Verfahren wie in Beispiel 1 angewandt,
mit Ausnahme der Extraktionszeit, die zehn Minuten betrug.
Vor der Extraktion wog die Probe 3,924 g und nach der
Extraktion 1,2084 g, was einem Polypropylenanteil von
30,8% entspricht.

Beispiel 3
Das Verfahren entsprach dem von Beispiel 1, mit Ausnahme
der Extraktionszeit, die zwölf Minuten betrug. Vor der
Extraktion wog die Probe 4,5678 g und nach der Extraktion
1,3974 g, was einem Polypropylenanteil von 30,6% entspricht.
Nach der Extraktion betrug das Lösungsgemisch in jedem
der drei obigen Beispiele ca. 30% Polypropylen, 52%
Sojabohnenöl und 18% Rizinusöl. Wie die obigen Beispiele
zeigen, wurde im wesentlichen die gesamte geeigente
Flüssigkeit aus dem Polypropylenfaservlies extrahiert.
Die Aufnahmen der Fasern gemäß Abbildung 4 und 5 zeigen eine
wesentliche Anzahl von miteinander verbundenen kugelförmigen
Hohlräumen, vergleichbar mit den in U.S.-Patent 4,247,498
beschriebenen Mikroporen.

Beispiel 4

Proben der erfindungsgemäßen porösen geblasenen Faservliese
- unten als A bis E bezeichnet - wurden nach Extraktion
der Flüssigkeit mit einem AGA-Infrarottester mit und ohne
Belastung auf ihre Wärmeleitfähigkeit untersucht, wobei
die Proben verschiedene Porengrößen aufwiesen. Der
AGA-Infrarot-Tester stammte von der AGA Corporation
in Secaucus, New Jersey. Zur Bestimmung der Isolierwirkung
wurden Vliesproben in einem Raum mit einer Temperatur
von 29°C auf einen Dampftisch von 90°C gelegt. Danach
wurden die Gleichgewichtsoberflächentemperaturen der Vliese
mit dem AGA-Infrarottester gemessen. Bei einer niedrigen
Oberflächentemperatur handelte es sich um ein Vlies mit
einer guten Isolierwirkung, die mit Hilfe der folgenden
Formel berechnet wurde:

$$\text{Isolierwirkung in \%} = \frac{90°C - \text{Oberflächentemperatur}}{90°C - 29°C} \cdot 100$$

Zur Simulierung der Belastung im Schlafsack wurden die
Proben mit einer Platte von ca. 232 cm² und mit einem
Gewicht von ca. 2,16 kg belastet, was einem Druck von ca. 9,3 g
pro cm² entspricht. Diese Proben wurden mit Sontique
von Du Pont und Thinsulate von 3M verglichen, wie aus
der folgenden Tabelle hervorgeht:

| Probe | Verhältnis von Flüssigkeit zu Polypropylen | MFI* | Dichte (g/cm) | Isolierwirkung in % unbelastet | belastet |
|---|---|---|---|---|---|
| A | 80/20 | 300 | 0,51 | 62 | 55 |
| B | 60/40 | 300 | 0,46 | 64 | 54 |
| C | 70/30 | 300 | 0,56 | 67 | 55 |
| D | 70/30 | 25 | 0,43 | 62 | 49 |
| E | 70/30 | 8 | 0,36 | 59 | 46 |
| Sontique | | - | 0,24 | 61 | 20 |
| Thinsulate | | - | 0,17 | 66 | 26 |

* MFI (melt flow index) ist ein Maß für die Schmelzviskosität.

An den obigen Proben A-E wurde auch die Wasserdampfaufnahme
bestimmt. Dabei wurden die Vliese sechs Stunden auf ein
Becherglas mit Wasser von 38°C gelegt. Sie wurden sowohl
vor als auch nach der sechsstündigen Behandlung gewogen.
Bei allen Proben betrug die Wasserdampfaufnahme 0.

Beispiel 5

An allen sieben Proben von Beispiel 4 wurde zusätzlich
das Wasseraufnahmevermögen bestimmt. Die unten genannten
Vliese wurden jeweils in eine Schale gelegt und mit einem
Löschpapier und einem Gewicht von ca. 910 g versehen.
Dann wurde Wasser in die Schale gegossen, bis das Vlies
zur Hälfte mit Wasser bedeckt war. Nach sechs Stunden
wurden die Proben entnommen und gewogen. Die Ergebnisse
sind in der folgenden Tabelle zusammengefaßt:

| Probe | MFI | Mischungsverhältnis Flüssigkeit/PP | Wasseraufnahme % | Löschpapier |
|-------|-----|-----------------------------------|------------------|-------------|
| A | 300 | 80/20 | 8,1 | trocken |
| B | 300 | 60/40 | 21,3 | trocken |
| C | 300 | 70/30 | 129,6 | trocken |
| D | 25 | 70/30 | 6,4 | trocken |
| E | 8 | 70/30 | 8,1 | trocken |
| Sontique | - | - | 120,6 | trocken |
| Thinsulate | - | - | 55,1 | trocken |

- 24 -

Wie aus der Tabelle hervorgeht, sind die Proben A - E der
vorliegenden Erfindung wesentlicher stärker hydrophob als
Sontique und Thinsulate, abgesehen von Probe C, die aufgrund
von Verunreinigung überschüssige nicht extrahierte porenbildende Flüssigkeit enthielt.

Das Aufnahmevermögen für flüssigen Wasserdampf und dessen
Weitertransport wurden hauptsächlich wegen der Möglichkeit
geprüft, das Isoliermaterial in Schlafsäcken einzusetzen,
die teilweise in flüssiges Wasser getaucht werden könnten.
Dies könnte zu einer verringerten Isolierwirkung (hohe
Wasseraufnahme) oder zur Weiterleitung des Wassers zum
Benutzer des Schlafsacks führen.

Die geringe Feuchtigkeitsaufnahme ist auf das trotz der
Poren vorhandene hydrophobe Verhalten des Polypropylens
zurückzuführen.

Beispiel 6
Die drei untengenannten Vliesproben wurden auf Wärmeleitfähigkeit/Wärmedurchgangswiderstand gemäß den in
ASTM C-177 beschriebenen Verfahren geprüft. Die Probe wurde
erfindungsgemäß aus einem Polypropylenmaterial hergestellt,
wobei die Poren durch Extraktion einer Mischung aus Sojabohnenöl und Rizinusöl gebildet wurden. Vor der Extraktion
der Öle betrug der Gewichtsanteil der einzelnen Bestandteile
30% Polypropylen, 52% Sojabohnenöl und 18% Rizinusöl.

- 25 -

| | Du Pont Sontique | 3 M Thinsulate | Vorliegende Erfindung |
|---|---|---|---|
| Prüfdicke, inches | 0,402 | 0,457 | 0,515 |
| Mittlere Prüftemperatur °F | 74,45 | 74,81 | 75,42 |
| Wärmeleitfähigkeit, (k) in Btu·in/h·ft² ·°F * | 0,241 | 0,244 | 0,239 |
| Wärmedurchgangswiderstand (R) in h·ft²·°F/Btu * | 1,67 | 1,91 | 2,15 |

* Btu·in/h·ft²·°F ist ein Maß für die Wärmeleitfähigkeit, wobei Btu British Thermal Unit bedeutet, d.h. die Wärme, die erforderlich ist, um 1 lb Wasser von 39°F auf 40°F zu erwärmen.


## Beispiel 7

Die Proben von Beispiel 5 wurden erneut auf Wärmeleitfähigkeit/Wärmedurchgangswiderstand gemäß den in ASTM C-177 beschriebenen Verfahren geprüft, wobei die Proben jedoch auf 50% ihrer ursprünglichen Dicke zusammengedrückt wurden, mit Ausnahme der Probe der vorliegenden Erfindung, die sich nur auf 59% ihrer ursprünglichen Dicke zusammendrücken ließ.

| | Du Pont Sontique | 3 M Thinsulate | Vorliegende Erfindung |
|---|---|---|---|
| Prüfdicke, inches | 0,199 | 0,227 | 0,304 |
| Mittlere Prüftemperatur °F | 75,39 | 75,20 | 74,46 |
| Wärmeleitfähigkeit, (k) in Btu·in/h·ft²· °F | 0,217 | 0,220 | 0,245 |
| Wärmedurchgangswiderstand (R) in h·ft²·°F/Btu | 0,92 | 1,03 | 1,24 |

- 26 -

Neben Polypropylen kann man als Ausgangspolymer auch Polyamid 6 mit Glycerin als der geeigneten Flüssigkeit verwenden. Polyamid kann sich wegen seines höheren Schmelzpunktes und besseren Erholungsvermögens nach Belastung für den Einsatz in Vliesen als günstiger erweisen. Das Glycerin läßt sich mit Wasser extrahieren, was zu einer wesentlichen Vereinfachung der Extraktion und Rückgewinnung führt. Wegen ihres hydrophilen Verhaltens wären Polyamidvliese für die für Polypropylen ins Auge gefaßten Anwendungen als Isoliermaterial weniger gut geeignet. Sowohl Polyamid- als auch Polypropylenvliese lassen sich jedoch zur gesteuerten Abgabe von Wirkstoffen einsetzen, z.B. in Form von Vliesen aus porösen Fasern, in die Nikotin eingebracht wird, so daß das Vlies als rauchlose Zigarette dient. Außerdem sind Polypropylenvliese in der Lage, aus Wasser/Öl-Gemischen selektiv Öl aufzunehmen, während Polyamidvliese aus Öl/Wasser-Gemischen das Wasser aufnehmen.

## Beispiel 8

Zur Veranschaulichung des Ölaufnahmevermögens eines Polypropylenvlieses wurden die unten beschriebenen Versuche mit drei erfindungsgemäß hergestellten Vliesen durchgeführt. Dabei wurden aus Kühlöl (Schneidöl) und Wasser folgende Gemische hergestellt:

– 27 –

|  | Öl/Wasser (Volumen) | Öl/Wasser (Gewicht) |
|---|---|---|
| Gemisch A | 5%/95% | 4,5g/95g |
| Gemisch B | 50%/50% | 45g/50g |
| Gemisch C | 95%/5% | 85g/5g |

Nach dem Durchrühren der einzelnen Mischungen wurde die Trennzeit ermittelt. Dabei erhielt man folgendes Ergebnis:

A    51 Sekunden
B    > 60 Minuten
C    > 60 Minuten

Drei Proben eines aus porösen Polypropylenfasern bestehenden Vlieses wurden zerschnitten und in Buckner-Trichter gegeben. Vor der Extraktion der geeigneten Flüssigkeit bestanden die Vliese aus 70% N,N-bis-β-Hydroxyäthyl-Talgamin und 30% Polypropylen. Jedes Wasser-Öl-Gemisch wurde durchgerührt und dann in einen das Vlies enthaltenden Trichter gegossen.
Dabei wurde folgendes beobachtet:
Gemisch A – Beim Eingießen der 100 ml des Gemisches in den Trichter drang ein Teil des Öls in das Vlies ein. Dadurch konnte auch das Wasser in das Vlies eindringen. Beim Durchsickern des Wassers drang das nun oben befindliche restliche Öl in das Vlies ein. Die im Kolben aufgefangene Lösung bestand ausschließlich aus Wasser. Danach wurden nochmals 100 ml Wasser in den Trichter gegossen, die ebenfalls durch das Vlies durchsickerten. Das gesamte Öl blieb im Vlies zurück. Die Filtrierzeit betrug 14 Minuten.

Gemisch B - Dieses Gemisch wurde nach dem gleichen Verfahren
wie Gemisch A getestet. Hierbei sickerte jedoch nach der
Sättigung des Vlieses mit Öl sowohl das Öl als auch das
Wasser in den Kolben durch. Die Filtrierzeit betrug 1
Stunde und 18 Minuten.

Gemisch C - Auch diese Mischung wurde in der gleichen
Weise wie Gemisch A geprüft. Hierbei führte das Öl zu
einer sofortigen Sättigung des Vlieses und lief dann
in den Kolben zusammen mit den 5% Wasser. Die Filtrierzeit
betrug 6 Minuten.
Es wurde noch ein weiteres Vlies untersucht, um festzustellen, wieviel Öl für eine vollständige Sättigung des
Vlieses erforderlich ist. Außerdem wurde eine Probe
des nicht erfindungsgemäß hergestellten, zur Aufnahme
von Öl von Böden etc. verwendeten "Safety Absorbent"
getestet. Das "Safety Absorbent" wurde von Maltan,
Inc., Middleton, Tennessee, bezogen. Dabei erhielt man
folgendes Ergebnis:

|  | Erfindungsgemäßes Vlies | Safety Absorbent |
|---|---|---|
| Trockengewicht | 2,4 g | 8,0 g |
| Öl gesättigt | 44,0 g | 14,7 g |
| Aufnahme in % | 1733 | 83,8 |

Es wurden 500 ml eines Gemisches aus 99,5% Wasser und
0,5% Kühlöl hergestellt. Dieses Gemisch wurde in ein
Gefäß von 250 ml gegeben. In dieser Lösung wurde eine
vierte Probe eines porösen Polypropylenvlieses (0,7 g)
24 Stunden gelagert. Es zeigte sich, daß das Vlies einen
Teil des Öls absorbierte.

- 29 -

Aus den obigen Beispielen und Darlegungen geht somit hervor,
daß hier ein einzigartiges Faservlies gefunden wurde, dessen
Einsatzmöglichkeiten von einer verbesserten Wärmeisolierung über die gesteuerte Abgabe von Wirkstoffen bis hin
zur Trennung von Öl und Wasser reichen.

Aus der vorstehenden Beschreibung der bevorzugten Ausführungsformen der vorliegenden Erfindung geht hervor,
daß es sich hier lediglich um eine Veranschaulichung
der Erfindung anhand von Beispielen handelt und daß die
Erfindung nicht darauf beschränkt ist. Der wahre Geist
und Umfang der vorliegenden Erfindung ist somit in den
im Anhang enthaltenen Patentansprüchen zusammengefaßt.

Patentansprüche

1. Faservlies aus einer Vielzahl von synthetischen, willkürlich zueinander angeordneten verwirbelten Fasern,
   die eine voluminöse nichtgewebte Vliesstruktur bilden,
   dadurch gekennzeichnet, daß die Fasern aus einer eine
   Vielzahl von im wesentlichen kugelförmigen Hohlräumen
   enthaltenden Polymerstruktur bestehen.

2. Vlies nach Anspruch 1, dadurch gekennzeichnet, daß eine
   wesentliche Anzahl von aneinander angrenzenden Hohlräumen miteinander verbunden ist.

3. Vlies nach Anspruch 1 oder 2, dadurch gekennzeichnet, daß
   die Hohlräume Durchmesser zwischen 0,05 µm und 50 µm aufweisen.

4. Vlies nach Anspruch 3, dadurch gekennzeichnet, daß die
   Hohlräume Durchmesser zwischen 0,05 und 1,1 µm aufweisen.

5. Vlies nach einem oder mehreren der Ansprüche 1 bis 4, dadurch gekennzeichnet, daß eine wesentliche Anzahl der
   Hohlräume einen Durchmesser von ca. 0,4 µm aufweisen.

6. Vlies nach einem oder mehreren der Ansprüche 1 bis 5, dadurch gekennzeichnet, daß das Vlies Fasern mit unterschiedlichem Durchmesser enthält.

7. Vlies nach einem oder mehreren der Ansprüche 1 bis 6, dadurch gekennzeichnet, daß der Durchmesser der Fasern zwischen 2 µm und 70 µm liegt.

8. Vlies nach einem oder mehreren der Ansprüche 1 bis 7, dadurch gekennzeichnet, daß die Fasern aus einem hydrophoben Polymer bestehen.

9. Vlies nach Anspruch 8, dadurch gekennzeichnet, daß das Polymer Polypropylen oder Polyäthylen ist.

10. Vlies nach Anspruch 8 oder 9, dadurch gekennzeichnet, daß das Material Öl absorbiert.

11. Vlies nach einem oder mehreren der Ansprüche 1 bis 7, dadurch gekennzeichnet, daß die Fasern aus einem hydrophilen Material bestehen.

12. Vlies nach Anspruch 11, dadurch gekennzeichnet, daß das hydrophile Material Polyamid oder Polymethylacrylat ist.

13. Vlies nach einem oder mehreren der Ansprüche 1 bis 12, dadurch gekennzeichnet, daß die Wärmeübertragung durch das belastete Vlies im wesentlichen der des unbelasteten Vlieses entspricht.

14. Vlies nach einem oder mehreren der Ansprüche 1 bis 13, dadurch gekennzeichnet, daß es in den Hohlräumen einen Stoff enthält, der so beschaffen ist, daß er langsam aus dem Vlies freigesetzt werden kann.

15. Vlies nach Anspruch 14, dadurch gekennzeichnet, daß der Stoff Nikotin ist.

16. Verfahren zur Herstellung eines Vlieses mit einer Vielzahl von im wesentlichen aus Endlosfilamenten bestehenden Fasern, die ein Faservlies bilden, wobei die Fasern jeweils eine Vielzahl von Poren aufweisen, dadurch gekennzeichnet, daß man eine Mischung aus einem Ausgangspolymer und einer geeigneten Flüssigkeit bis zur Bildung einer homogenen Lösung erhitzt, die Lösung durch eine schmale Düse preßt, beim Austritt der Lösung aus der Düse ein Gas auf die Lösung bläst, die Lösung abkühlt, so daß eine Vielzahl von Fasern entsteht, die Fasern in Form eines Vlieses auf ein Substrat ablegt und einen wesentlichen Teil der geeigneten Flüssigkeit aus dem Polymer entfernt, wodurch in den Fasern Poren entstehen.

17. Verfahren nach Anspruch 16, dadurch gekennzeichnet, daß das Ausgangspolymer hydrophob ist.

18. Verfahren nach Anspruch 17, dadurch gekennzeichnet, daß das Ausgangspolymer Polypropylen oder Polyäthylen ist.

19. Verfahren nach Anspruch 16, dadurch gekennzeichnet, daß das Ausgangspolymer hydrophil ist.

20. Verfahren nach Anspruch 19, dadurch gekennzeichnet, daß das Ausgangspolymer Polyamid oder Polymethylacrylat ist.

21. Verfahren nach einem oder mehreren der Ansprüche 16 bis 20, dadurch gekennzeichnet, daß die geeignete Flüssigkeit N,N-bis(2-Hydroxyäthyl)-talgamin ist.

22. Verfahren nach einem oder mehreren der Ansprüche 16 bis 20, dadurch gekennzeichnet, daß die geeignete Flüssigkeit eine Mischung aus mehreren Stoffen ist.

23. Verfahren nach Anspruch 22, dadurch gekennzeichnet, daß die geeignete Flüssigkeit eine Mischung aus Sojabohnenöl und Rizinusöl ist.

24. Verfahren nach einem oder mehreren der Ansprüche 16 bis 23, dadurch gekennzeichnet, daß die Düse mindestens eine Öffnung für den Durchlauf der Lösung und mindestens eine Öffnung für die Durchleitung eines Gases besitzt.

25. Verfahren nach einem oder mehreren der Ansprüche 16 bis 24, dadurch gekennzeichnet, daß das eingesetzte Gas Luft ist.

26. Verfahren nach einem oder mehreren der Ansprüche 16 bis 25, dadurch gekennzeichnet, daß nach dem Austritt der der Lösung aus der Düse zusätzlich Kaltluft auf die Lösung geleitet wird.

27. Verfahren nach einem oder mehreren der Ansprüche 16
bis 26, dadurch gekennzeichnet, daß eine Lösung mit
einer Viskosität von 20 bis 200 Pa·s verwendet wird.

28. Verfahren nach Anspruch 27, dadurch gekennzeichnet, daß
die Lösung zu Endlosfilamenten verarbeitet wird.

29. Verfahren nach einem oder mehreren der Ansprüche 16
bis 28, dadurch gekennzeichnet, daß das Vlies aufgewickelt wird.

30. Verfahren nach einem oder mehreren der Ansprüche 16
bis 29, dadurch gekennzeichnet, daß die Fasern auf eine
Siebtrommel abgelegt werden.

31. Verfahren nach einem oder mehreren der Ansprüche 16
bis 30, dadurch gekennzeichnet, daß aus den Fasern
mehrere Lagen gebildet werden.

32. Verfahren nach einem oder mehreren der Ansprüche 16
bis 31, dadurch gekennzeichnet, daß die geeignete Flüssigkeit mit einem Alkohol entfernt wird.

33. Verwendung des Vlieses nach einem oder mehreren der Ansprüche 1 bis 32, als Wärmeisoliermaterial.

34. Verwendung des Vlieses nach Anspruch 33, dadurch gekennzeichnet, daß das Vlies zwischen zwei Lagen eines textilen Materials gelegt wird.

35. Verwendung eines Faservlieses nach einem oder mehreren der Ansprüche 1 bis 32 zur Trennung von Öl und Wasser.

36. Verwendung des Vlieses nach Anspruch 35, dadurch gekennzeichnet, daß man ein Vlies einsetzt, welches das Öl oder das Wasser, nicht jedoch beide Flüssigkeiten, aufnimmt und man das Vlies in einen Öl und Wasser enthaltenden Bereich bringt, das Öl oder das Wasser in das Vlies eindringen läßt und das mit der Flüssigkeit getränkte Vlies aus dem genannten Bereich entfernt.

37. Verwendung eines Vlieses nach Anspruch 36, dadurch gekennzeichnet, daß man das Vlies dadurch in einen Wasser und Öl enthaltenden Bereich bringt, daß man Öl und Wasser zusammen auf das Vlies gießt.

38. Verwendung des Vlieses nach den Ansprüchen 35, 36 oder 37, dadurch gekennzeichnet, daß ein aus hydrophoben Fasern bestehendes Vlies eingesetzt wird, welches Öl, nicht jedoch Wasser, aufnimmt.

39. Verwendung des Vlieses nach Anspruch 38, dadurch gekennzeichnet, daß die Fasern hauptsächlich aus Polypropylen bestehen.

40. Verwendung des Vlieses nach den Ansprüchen 35, 36 oder 37, dadurch gekennzeichnet, daß ein aus hydrophilen Fasern bestehendes Vlies eingesetzt wird, welches Wasser, nicht jedoch Öl, aufnimmt.

41. Verwendung des Vlieses nach Anspruch 40, dadurch gekennzeichnet, daß die Fasern hauptsächlich aus Polyamid bestehen.

42. Verwendung eines Faservlieses nach einem oder mehreren der Ansprüche 1 bis 32 zur gesteuerten Abgabe von Wirkstoffen.

43. Verwendung des Vlieses nach Anspruch 42, dadurch gekennzeichnet, daß man das Vlies in einen eine Flüssigkeit enthaltenden Bereich bringt, die Flüssigkeit in das Vlies eindringen läßt, das Vlies aus dem genannten Bereich entfernt und die Flüssigkeit aus dem Vlies austreten läßt.

44. Verwendung des Vlieses nach Anspruch 43, dadurch gekennzeichnet, daß die Flüssigkeit Nikotin ist.

45. Verwendung des Vlieses nach Anspruch 44, dadurch gekennzeichnet, daß der Tabak in Zigaretten durch das mit der Flüssigkeit getränkte Vlies ersetzt wird.

Abb. 1

Abb. 2

0184733

Abb. 3

10µ 15kU 101E3 0012/10 INSIDE

Abb. 4

Abb. 5